# EUROPEAN PATENT APPLICATION

(11) **EP 3 868 714 A1**
(43) Date of publication of application: **25.08.2021**
(21) Application number: 19889718.3
(22) Date of filing: 01.11.2019
(51) Int. Cl.: C01G 45/12, H01M 4/505, H01M 4/131, H01M 10/052, H01M 4/02

(54) **OCTAHEDRAL LITHIUM MANGANESE-BASED POSITIVE ELECTRODE ACTIVE MATERIAL, AND POSITIVE ELECTRODE AND LITHIUM SECONDARY BATTERY INCLUDING SAME**

(30) Priority: 30.11.2018 KR 20180152274
(71) Applicant: LG ENERGY SOLUTION, LTD., Seoul 07335 (KR)
(72) Inventor: LHO, Eun Sol, Daejeon 34122 (KR); JUNG, Wang Mo, Daejeon 34122 (KR); KANG, Min Suk, Daejeon 34122 (KR); LEE, Sang Wook, Daejeon 34122 (KR); BAEK, So Ra, Daejeon 34122 (KR); WANG, Wen Xiu, Daejeon 34122 (KR)
(74) Representative: Hoffmann Eitle
(86) International application number: PCT/KR2019/014733
(87) International publication number: WO 2020/111543

(57) **Abstract**

The present invention relates to a method of preparing an octahedral-structured lithium manganese-based positive electrode active material which includes mixing a manganese raw material, a raw material including doping element M¹ (where the doping element M¹ is at least one element selected from the group consisting of Mg, Al, Li, Zn, B, W, Ni, Co, Fe, Cr, V, Ru, Cu, Cd, Ag, Y, Sc, Ga, In, As, Sb, Pt, Au, and Si), and a lithium raw material and sintering the mixture in an oxygen atmosphere to prepare a lithium manganese oxide having an octahedral structure and doped with the doping element M¹, wherein the sintering includes performing first sintering at 400°C to 700°C for 3 hours to 10 hours and performing second sintering at 700°C to 900°C for 10 hours to 20 hours, an octahedral-structured lithium manganese-based positive electrode active material prepared by the above preparation method, and a positive electrode and a lithium secondary battery which include the positive electrode active material.

## Description

### TECHNICAL FIELD

### Cross-reference to Related Applications

This application claims the benefit of Korean Patent Application No. 10-2018-0152274, filed on November 30, 2018, in the Korean Intellectual Property Office, the disclosure of which is incorporated herein in its entirety by reference.

### Technical Field

The present invention relates to a positive electrode active material for a lithium secondary battery, and a positive electrode and a lithium secondary battery which include the positive electrode active material. Specifically, the present invention relates to an octahedral-structured lithium manganese-based positive electrode active material in which high-temperature life characteristics are excellent by improving Mn dissolution, and a positive electrode and a lithium secondary battery which include the positive electrode active material.

### BACKGROUND ART

Demand for secondary batteries as an energy source has been significantly increased as technology development and demand with respect to mobile devices have increased. Among these secondary batteries, lithium secondary batteries having high energy density, high voltage, long cycle life, and low self-discharging rate have been commercialized and widely used.

Lithium transition metal composite oxides have been used as a positive electrode active material of the lithium secondary battery, and, among these oxides, a lithium cobalt composite metal oxide, such as LiCoO₂, having a high working voltage and excellent capacity characteristics has been mainly used. However, since the LiCoO₂ has very poor thermal properties due to an unstable crystal structure caused by delithiation and is expensive, there is a limitation in using a large amount of the LiCoO₂ as a power source for applications such as electric vehicles.

Lithium manganese-based oxides (LiMnO₂ or LiMn₂O₄), lithium iron phosphate compounds (LiFePO₄, etc.), or lithium nickel composite metal oxides (LiNiO₂, etc.) have been developed as materials for replacing the LiCoO₂. Among these materials, the lithium manganese-based oxide is advantageous in that its thermal stability and output characteristics are excellent and the price is low, but the lithium manganese-based oxide has limitations in that structural distortion (Jahn-Teller distortion) caused by Mn³⁺ occurs during charge and discharge, and performance rapidly degrades because manganese (Mn) dissolution occurs due to HF formed by a reaction with an electrolyte solution at high temperature.

Thus, there is a need to develop a positive electrode active material in which a secondary battery having excellent high-temperature characteristics may be prepared at a low cost by suppressing the Mn dissolution of the lithium manganese-based oxide.

### DISCLOSURE OF THE INVENTION

### TECHNICAL PROBLEM

An aspect of the present invention provides an octahedral-structured lithium manganese-based positive electrode active material in which high-temperature life characteristics are excellent by suppressing the dissolution of manganese (Mn).

Another aspect of the present invention provides a positive electrode for a lithium secondary battery which may achieve excellent storage characteristics and life characteristics at high temperatures by including the positive electrode active material.

Another aspect of the present invention provides a lithium secondary battery in which high-temperature storage characteristics and high-temperature life characteristics are excellent by including the positive electrode according to the present invention.

### TECHNICAL SOLUTION

According to an aspect of the present invention, there is provided a method of preparing an octahedral-structured lithium manganese-based positive electrode active material which includes: mixing a manganese raw material, a raw material including doping element M¹ (where the doping element M¹ is at least one element selected from the group consisting of magnesium (Mg), aluminum (Al), lithium (Li), zinc (Zn), boron (B), tungsten (W), nickel (Ni), cobalt (Co), iron (Fe), chromium (Cr), vanadium (V), ruthenium (Ru), copper (Cu), cadmium (Cd), silver (Ag), yttrium (Y), scandium (Sc), gallium (Ga), indium (In), arsenic (As), antimony (Sb), platinum (Pt), gold (Au), and silicon (Si)), and a lithium raw material and sintering the mixture in an oxygen atmosphere to prepare a lithium manganese oxide having an octahedral structure and doped with the doping element M¹, wherein the sintering includes performing first sintering at 400°C to 700°C for 3 hours to 10 hours and performing second sintering at 700°C to 900°C for 10 hours to 20 hours.

According to another aspect of the present invention, there is provided an octahedral-structured lithium manganese-based positive electrode active material including: a lithium manganese oxide represented by Formula 1 and doped with doping element M¹, wherein the lithium manganese oxide has an octahedral structure.

[Formula 1] Li₁₊ₐMn_{2-b}M¹_{b}O_{4-c}A_{c}

In Formula 1,
M¹ is at least one element selected from the group consisting of Mg, Al, Li, Zn, B, W, Ni, Co, Fe, Cr, V, Ru, Cu, Cd, Ag, Y, Sc, Ga, In, As, Sb, Pt, Au, and Si, A is at least one element selected from the group consisting of fluorine (F), chlorine (Cl), bromine (Br), iodine (I), astatine (At), and sulfur (S), 0≤a≤0.2, 0.05≤b≤0.3, and 0≤c≤0.1.

According to another aspect of the present invention, there is provided a positive electrode including a positive electrode collector, and a positive electrode active material layer formed on the positive electrode collector, wherein the positive electrode active material layer includes the octahedral-structured lithium manganese-based positive electrode active material according to the present invention.

According to another aspect of the present invention, there is provided a lithium secondary battery including the positive electrode according to the present invention.

### ADVANTAGEOUS EFFECTS

According to the present invention, since a shape of lithium manganese oxide particles is controlled by doping a lithium manganese oxide with a specific amount of doping element M¹, reactivity with an electrolyte solution may be reduced. Accordingly, manganese dissolution due to a reaction of the lithium manganese oxide with the electrolyte solution may be suppressed, and, as a result, the lithium manganese oxide has better high-temperature life characteristics than a conventional lithium manganese oxide.

### BRIEF DESCRIPTION OF THE DRAWINGS

The following drawings attached to the specification illustrate preferred examples of the present invention by example, and serve to enable technical concepts of the present invention to be further understood together with detailed description of the invention given below, and therefore the present invention should not be interpreted only with matters in such drawings.
FIGS. 1 through 7 are scanning electron microscope (SEM) images of lithium manganese oxides prepared in Examples 1 and 2 and Comparative Examples 1 to 5 of the present invention, respectively;
FIG. 8 is a graph illustrating amounts of manganese dissolution of the lithium manganese oxides prepared in Examples 1 and 2 and Comparative Examples 1 to 5 of the present invention at a state of charge (SOC) of 100%; and
FIG. 9 is a graph illustrating capacity characteristics during high-temperature (45°C) storage of secondary batteries prepared in Examples 1 and 2 and Comparative Examples 1 to 5 of the present invention.

### MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

An average particle diameter (D₅₀) in the present specification may be defined as a particle diameter at 50% in a cumulative particle diameter distribution, and may be measured by using a laser diffraction method. Specifically, with respect to the average particle diameter (D₅₀), after target particles are dispersed in a dispersion medium, the dispersion medium is introduced into a commercial laser diffraction particle size measurement instrument (e.g., Microtrac MT 3000) and irradiated with ultrasonic waves having a frequency of about 28 kHz and an output of 60 W, and the average particle diameter (D₅₀) at 50% in a particle number distribution of the measurement instrument may then be calculated.

Also, in the present specification, the expression "%" denotes wt% unless otherwise specified.

### Method of Preparing Positive Electrode Active Material

First, a method of preparing an octahedral-structured lithium manganese-based positive electrode active material according to the present invention will be described.

Specifically, the method includes: mixing a manganese raw material, a raw material including doping element M¹ (where the doping element M¹ is at least one element selected from the group consisting of magnesium (Mg), aluminum (Al), lithium (Li), zinc (Zn), boron (B), tungsten (W), nickel (Ni), cobalt (Co), iron (Fe), chromium (Cr), vanadium (V), ruthenium (Ru), copper (Cu), cadmium (Cd), silver (Ag), yttrium (Y), scandium (Sc), gallium (Ga), indium (In), arsenic (As), antimony (Sb), platinum (Pt), gold (Au), and silicon (Si)), and a lithium raw material and sintering the mixture in an oxygen atmosphere to prepare a lithium manganese oxide having an octahedral structure and doped with the doping element M¹, wherein the sintering includes performing first sintering at 400°C to 700°C for 3 hours to 10 hours and performing second sintering at 700°C to 900°C for 10 hours to 20 hours. Hereinafter, the preparation method according to the present invention will be described in detail.

The lithium manganese oxide according to the present invention may be prepared by mixing a manganese raw material, a raw material including doping element M¹, and a lithium raw material and sintering the mixture in an oxygen atmosphere.

In this case, the manganese raw material may include a manganese element-containing oxide, hydroxide, oxyhydroxide, carbonate, sulfate, halide, sulfide, acetate, or carboxylate, or a combination thereof, and may specifically include MnO₂, MnCl₂, MnCO₃, Mn₃O₄, MnSO₄, Mn₂O₃, or Mn(NO₃)₂, but the manganese raw material is not limited thereto.

The raw material including doping element M¹ may include at least one selected from the group consisting of doping element M¹-containing oxide, hydroxide, oxyhydroxide, sulfate, carbonate, halide, sulfide, acetate, and carboxylate.

In this case, the doping element M¹ may be at least one element selected from the group consisting of Mg, Al, Li, Zn, B, W, Ni, Co, Fe, Cr, V, Ru, Cu, Cd, Ag, Y, Sc, Ga, In, As, Sb, Pt, Au, and Si, and may preferably include Mg and Al. For example, the doping element M¹-containing raw material may include AlSO₄, AlCl₃, Al-isopropoxide, AlNO₃, MgO, Mg(OH)₂, MgSO₄, or Mg(NO₃)₂, but the doping element M¹-containing raw material is not limited thereto.

The lithium raw material may be a lithium-containing carbonate (e.g., lithium carbonate, etc.), hydrate (e.g., lithium hydroxide monohydrate (LiOH·H₂O, etc.), hydroxide (e.g., lithium hydroxide, etc.), nitrate (e.g., lithium nitrate (LiNO₃), etc.), or chloride (e.g., lithium chloride (LiCl), etc.), but the lithium raw material is not limited thereto.

According to the present invention, stability may be improved while the doping element M¹ is diffused by doping with the doping element M¹ to replace Mn ions with M¹. Particularly, a (111) oriented surface is a plane with the lowest surface energy, wherein, since it is the most stable, the stability is improved by the doping element M1, and thus, the lithium manganese oxide is formed to have an octahedral structure in which the (111) oriented surface is exposed.

Particularly, the doping element M¹-containing raw material may be mixed such that an amount of the doping element M¹ satisfies a value of b for the finally prepared lithium manganese oxide represented by Formula 1.

[Formula 1] Li₁₊ₐMn_{2-b}M¹_{b}O_{4-c}A_{c}

In Formula 1,
M¹ is at least one element selected from the group consisting of Mg, Al, Li, Zn, B, W, Ni, Co, Fe, Cr, V, Ru, Cu, Cd, Ag, Y, Sc, Ga, In, As, Sb, Pt, Au, and Si, A is at least one element selected from the group consisting of fluorine (F), chlorine (Cl), bromine (Br), iodine (I), astatine (At), and sulfur (S), 0≤a≤0.2, 0.05≤b≤0.3, and 0≤c≤0.1.

Since the doping element M¹-containing raw material is mixed so as to satisfy the value of b, preferably 0.05≤b≤0.3, and more preferably 0.01≤b≤0.2, a shape of lithium manganese oxide particles may be more easily controlled by doping with the doping element M¹.

For example, in a case in which the doping element M¹ is included in an amount of less than the above range based on 100 parts by weight of the finally prepared lithium manganese oxide, a particle shape-controlling effect due to the doping with the doping element may be insignificant, and, in a case in which the doping element M¹ is included in an amount of greater than the above range, since the doping source is excessively added, its crystal structure may be formed as a pseudo spinel structure or a layered structure instead of a spinel structure, and, accordingly, the octahedral structure, in which the (111) oriented surface dominates due to the improved structural stability, is not formed.

The manganese raw material, the raw material including doping element M¹, and the lithium raw material may be mixed in amounts such that a molar ratio of Mn:M¹:Li is in a range of 1.7:0.3:1 to 1.99:0.01:1.2, preferably 1.8:0.2:1 to 1.95:0.05:1.1, and most preferably 1.8:0.2:1 to 1.9:0.1:1.1. In a case in which the manganese raw material, the raw material including doping element M¹, and the lithium raw material are mixed in amounts within the above range, an octahedral-structured lithium manganese oxide may be obtained, and, accordingly, manganese dissolution may be suppressed.

Also, the mixing may be performed by solid-phase mixing or liquid-phase mixing. In a case in which each component is mixed by the solid-phase mixing, a sintering process may be performed without a separate drying process, and, in a case in which each component is mixed by the liquid-phase mixing, a sintering process is performed after the mixed components are spray-dried.

The sintering may be performed in an oxidizing atmosphere. In a case in which the sintering is performed in an oxidizing atmosphere, since oxygen deficiency is prevented, a structurally more stable lithium manganese oxide may be synthesized, and thus, the octahedral structure of the present invention may be more easily formed. In contrast, in a case in which the sintering is performed in an air atmosphere or inert atmosphere instead of the oxidizing atmosphere, since the oxygen deficiency of the lithium manganese oxide may be intensified, the lithium manganese oxide may be structurally unstable. That is, the surface of the positive electrode active material may not be formed as a (111) phase, but may be formed by being mixed with different phases.

Also, the sintering may be performed in multiple stages, wherein first sintering may be performed at 400°C to 700°C, for example, 500°C to 700°C for 3 hours to 10 hours, for example, 4 hours to 7 hours, and second sintering may be performed at 700°C to 900°C, for example, 700°C to 850°C for 10 hours to 20 hours, for example, 15 hours to 18 hours.

In a case in which the sintering process is performed in multiple stages as in the present invention, since it gives sufficient time for the manganese raw material, the raw material including doping element M¹, and the lithium raw material to react with each other, sintering is easy, and thus, a structurally stable spinel phase may be easily formed. In addition, the lithium manganese oxide having an octahedral structure according to the present invention may be easily prepared by development of the structurally stable (111) phase.

For example, a reaction with lithium may be facilitated by the first sintering, and a reaction with the doping element M¹ may be facilitated by the second sintering to form a stable spinel phase.

For example, in a case in which the sintering is not performed in multiple stages, but is performed at once, since the reaction of each stage does not occur sufficiently, agglomeration of the particles occurs, and, as a result, a Brunauer-Emmett-Teller (BET) specific surface area of the positive electrode active material may be increased.

In addition, according to the present invention, forming a coating layer on a surface of the lithium manganese oxide doped with the doping element M¹ may be further included, if necessary.

For example, forming a coating layer including at least one element (hereinafter, referred to as a 'coating element') selected from the group consisting of Al, titanium (Ti), W, B, F, phosphorus (P), Mg, Ni, Co, Fe, Cr, V, Cu, calcium (Ca), Zn, zirconium (Zr), niobium (Nb), molybdenum (Mo), strontium (Sr), Sb, bismuth (Bi), Si, and S on the surface of the lithium manganese oxide doped with the doping element M¹ may be further included.

A method known in the art may be used for the formation of the coating layer, and, for example, a wet coating method, a dry coating method, a plasma coating method, or atomic layer deposition (ALD) may be used.

The wet coating method, for example, may be performed in such a manner that an appropriate solvent, such as ethanol, water, methanol, or acetone, is added to the lithium manganese oxide and a coating raw material, and then mixed until the solvent disappears.

The dry coating method is a method of solid-phase mixing the lithium manganese oxide and a coating raw material without a solvent, and, for example, a grinder mixing method or a mechanofusion method may be used.

The coating raw material may be an oxide, hydroxide, oxyhydroxide, carbonate, sulfate, halide, sulfide, acetate, or carboxylate, which includes at least one element (hereinafter, referred to as a 'coating element') selected from the group consisting of Al, Ti, W, B, F, P, Mg, Ni, Co, Fe, Cr, V, Cu, Ca, Zn, Zr, Nb, Mo, Sr, Sb, Bi, Si, and S, or a combination thereof, and, for example, may be ZnO, Al₂O₃, Al(OH)₃, AlSO₄, AlCl₃, Al-isopropoxide, AlNO₃, TiO₂, WO₃, AlF, H₂BO₃, HBO₂, H₃BO₃, H₂B₄O₇,B₂O₃, C₆H₅B(OH)₂, (C₆H₅O)₃B, (CH₃(CH₂)₃O)₃B, C₃H₉B₃O₆, (C₃H₇O₃)B, Li₃WO₄, (NH₄)₁₀W₁₂O₄₁·5H₂O, and NH₄H₂PO₄, but the coating raw material is not limited thereto.

After the coating raw material is attached to the surface of the lithium manganese oxide by the above-described method, a coating layer may be formed through a heat treatment. In this case, the heat treatment may be performed at 100°C to 700°C, for example, 300°C to 450°C, for 1 hour to 15 hours, for example, 3 hours to 8 hours.

### Positive Electrode Active Material

The lithium manganese-based positive electrode active material of the present invention includes a lithium manganese oxide doped with the doping element M¹, and the lithium manganese oxide has an octahedral structure.

Specifically, the lithium manganese oxide doped with the doping element M¹ may be represented by the following Formula 1.

[Formula 1] Li₁₊ₐMn_{2-b}M¹_{b}O_{4-c}A_{c}

In Formula 1, M¹ may be at least one element selected from the group consisting of Mg, Al, Li, Zn, B, W, Ni, Co, Fe, Cr, V, Ru, Cu, Cd, Ag, Y, Sc, Ga, In, As, Sb, Pt, Au, and Si, and may preferably be at least one element selected from the group consisting of Mg and Al.

A is an element substituted at an oxygen site in the lithium manganese oxide and may be at least one element selected from the group consisting of F, Cl, Br, I, At, and S.

1+a represents a molar ratio of lithium in the lithium manganese oxide, and a may satisfy 0≤a≤0.2, for example, 0≤a≤0.1.

b represents a molar ratio of the doping element M¹ in the lithium manganese oxide, and b may satisfy 0.05≤b≤0.3, for example, 0.01≤b≤0.2. In a case in which b, the molar ratio of M¹, satisfies the above range, a structurally stable positive electrode active material may be obtained while minimizing capacity reduction.

c represents a molar ratio of the element A in the lithium manganese oxide, and c may satisfy 0≤c≤0.1, for example, 0.01≤c≤0.05.

The lithium manganese oxide represented by Formula 1 is doped with the doping element M¹.

Since the lithium manganese oxide is doped with the doping element M¹, stability is improved, and thus, the particle shape of the lithium manganese oxide may be formed into an octahedral structure. Specifically, the surface of the lithium manganese oxide may have a phase, in which structurally the most stable (111) phase dominates, by the doping element M¹.

In a case in which the lithium manganese oxide is formed into an octahedral structure having a (111) oriented surface as described above, reactivity of the lithium manganese oxide having a (111) phase with the lowest surface energy with an electrolyte solution is also reduced. Accordingly, an amount of Mn dissolution may also be reduced according to a reaction of the lithium manganese oxide positive electrode active material.

Next, the lithium manganese oxide may further include a coating layer, if necessary.

In a case in which a coating layer is further formed on the surface of the lithium manganese oxide, the coating layer is to prevent the dissolution of manganese (Mn) at high temperatures and suppress gas generation during charge and discharge by blocking a contact between the lithium manganese oxide and the electrolyte solution. The coating layer is disposed on the surface of the lithium manganese oxide and includes at least one element (hereinafter, referred to as 'coating element') selected from the group consisting of Al, Ti, W, B, F, P, Mg, Ni, Co, Fe, Cr, V, Cu, Ca, Zn, Zr, Nb, Mo, Sr, Sb, Bi, Si, and S. The coating layer may preferably include at least one element selected from the group consisting of W, Mg, B, and Ti, and may more preferably include at least one element selected from the group consisting of W and B.

The coating layer may be continuously or discontinuously formed on the surface of the lithium manganese oxide represented by Formula 1.

For example, the coating layer may be formed in the form of islands in which particles including the coating elements are discontinuously attached to the surface of the lithium manganese oxide. In this case, the particles including the coating elements, for example, may be particles of oxides such as WO₃, B₂O₃, ZnO, Al₂O₃, TiO₂, MgO, CaO, NbO₂, SrO, CrO, Mo₂O₅, Bi₂O₃, and SiO. In a case in which the above-described oxide particles are present on the surface of the lithium manganese oxide, since the oxide particles capture and decompose HF formed by a reaction with the electrolyte solution as shown in Reaction Formula 1 below, the Mn dissolution due to the HF may be suppressed.

[Reaction Formula 1] ZnO +2HF → ZnF₂+H₂O Al₂O₃ + 6HF → 2AlF₃+3H₂O

Also, the coating layer may be formed in the form of a film including the coating elements on the surface of the lithium manganese oxide. In a case in which the coating layer is formed in the form of a film, an effect of blocking the contact between the electrolyte solution and the lithium manganese oxide and an effect of suppressing the manganese dissolution are better. Preferably, the film includes at least one element selected from the group consisting of W, Mg, B, and Ti. In a case in which the above-described film is formed on the surfaces of the lithium manganese oxide particles, a side reaction with the electrolyte solution and gas generation may be suppressed by blocking the contact with the electrolyte solution by the film.

The coating layer may be formed in an area corresponding to 50% to 100%, preferably 80% to 100%, and more preferably 90% to 100%of a total surface area of the lithium manganese oxide. In a case in which the coating layer formation area satisfies the above range, the contact between the electrolyte solution and the lithium manganese oxide may be effectively blocked.

Furthermore, the coating layer may have a thickness of 1 nm to 1,000 nm, for example, 1 nm to 100 nm or 10 nm to 1,000 nm. In the case that the coating layer is formed in the form of a film, the thickness may be in a range of 1 nm to 100 nm, and, in the case that coating layer is formed in the form of oxide particles, the thickness may be in a range of 10 nm to 1,000 nm. When the thickness of the coating layer satisfies the above range, the manganese dissolution and the occurrence of the side reaction with the electrolyte solution may be effectively suppressed while minimizing degradation of electrical performance.

The lithium manganese-based positive electrode active material of the present invention may include the doping element M¹ in an amount of 500 ppm to 40,000 ppm, preferably 2,500 ppm to 40,000 ppm, more preferably 5,000 ppm to 40,000 ppm, and most preferably 7,000 ppm to 20,000 ppm based on a total weight of the lithium manganese-based positive electrode active material. When the amount of the doping element M¹ satisfies the above range, the manganese dissolution at high temperatures is effectively suppressed, and, accordingly, a lithium secondary battery having excellent high-temperature storability may be achieved.

According to an embodiment, the lithium manganese-based positive electrode active material may include Li, or Li and Al and Mg, or a combination thereof, as a doping element, wherein the Al may be included in an amount of 0.05 mol% to 0.3 mol%, preferably 0.05 mol% to 0.25 mol%, more preferably 0.1 mol% to 0.25 mol%, and most preferably 0.1 mol% to 0.2 mol% based on a total amount of moles of the lithium manganese-based positive electrode active material.

The lithium manganese-based positive electrode active material according to the present invention may have an average particle diameter (D₅₀) of 5 µm to 20 µm, for example, 5 µm to 10 µm.

In a case in which the average particle diameter (D₅₀) of the lithium manganese-based positive electrode active material satisfies the above range, since its specific surface area may be reduced, a lithium manganese-based positive electrode active material with excellent structural stability and less side reaction with the electrolyte solution may be prepared. In this case, the amount of manganese dissolution may also be reduced by the reduction of the side reaction between the lithium manganese-based positive electrode active material and the electrolyte solution.

Also, the lithium manganese-based active material may have a specific surface area of 0.3 m²/g to 1.0 m²/g, for example, 0.5 m²/g to 1.0 m²/g. The specific surface area may be adjusted according to a particle diameter of primary particles of the lithium manganese-based active material. In a case in which the specific surface area of the lithium manganese-based active material is within the above range, since a reaction area with the electrolyte solution is minimized, excessive manganese dissolution may be suppressed while manganese participates properly in the reaction.

### Positive Electrode

Next, a positive electrode for a lithium secondary battery according to the present invention will be described.

The positive electrode according to the present invention includes a positive electrode collector, and a positive electrode active material layer formed on the positive electrode collector, wherein the positive electrode active material layer includes the octahedral-structured lithium manganese-based positive electrode active material according to the present invention and includes a conductive agent and/or a binder, if necessary.

In this case, since the positive electrode active material is the same as described above, detailed descriptions thereof will be omitted, and the remaining configurations will be only described in detail below.

The positive electrode active material may be included in an amount of 80 parts by weight to 99 parts by weight, for example, 85 parts by weight to 98.5 parts by weight based on 100 parts by weight of a total weight of the positive electrode active material layer. When the positive electrode active material is included in an amount within the above range, excellent capacity characteristics may be obtained.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500pm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 0.1 part by weight to 15 parts by weight based on 100 parts by weight of the total weight of the positive electrode active material layer.

The binder improves the adhesion between the positive electrode active material particles and the adhesion between the positive electrode active material and the current collector. Specific examples of the binder may be polyvinylidene fluoride (PVDF), polyvinylidene fluoridehexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, a styrene-butadiene rubber (SBR), a fluorine rubber, or various copolymers thereof, and any one thereof or a mixture of two or more thereof may be used. The binder may be included in an amount of 0.1 part by weight to 15 parts by weight based on 100 parts by weight of the total weight of the positive electrode active material layer.

The positive electrode of the present invention may be prepared according to a typical method of preparing a positive electrode except that the above-described octahedral-structured lithium manganese-based positive electrode active material is used. Specifically, a positive electrode material mixture, which is prepared by dissolving or dispersing the positive electrode active material as well as selectively the binder and/or the conductive agent in a solvent, is coated on the positive electrode collector, and the positive electrode may then be prepared by drying and rolling the coated positive electrode collector.

The solvent may be a solvent normally used in the art. The solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the positive electrode material mixture may be adjusted to have an appropriate viscosity in consideration of a coating thickness of a slurry and manufacturing yield.

Also, as another method, the positive electrode may be prepared by casting the positive electrode material mixture on a separate support and then laminating a film separated from the support on the positive electrode collector.

### Lithium Secondary Battery

Also, the present invention may prepare an electrochemical device including the positive electrode. The electrochemical device may specifically be a battery or a capacitor, and, for example, may be a lithium secondary battery.

The lithium secondary battery specifically includes a positive electrode, a negative electrode disposed to face the positive electrode, a separator disposed between the positive electrode and the negative electrode, and an electrolyte, wherein, since the positive electrode is the same as described above, detailed descriptions thereof will be omitted, and the remaining configurations will be only described in detail below.

Furthermore, the lithium secondary battery may further selectively include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 µm to 500pm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer selectively includes a binder and a conductive agent in addition to a negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

In the lithium secondary battery of the present invention, it is desirable to use a mixture of two or more kinds of carbon materials having particular specific surface areas as the negative electrode active material.

For example, the negative electrode active material may include natural graphite and soft carbon, and may specifically include natural graphite having a specific surface area (BET) of 2.5 m²/g to 4.0 m²/g and soft carbon having a specific surface area (BET) of 7 m²/g to 10 m²/g. In a case in which the positive electrode according to the present invention and the negative electrode including the natural graphite and soft carbon, which satisfy the above specific surface areas, are combined and configured, high-temperature durability of the secondary battery may be more improved. The negative electrode active material layer may further include artificial graphite, if necessary, and, in this case, the artificial graphite may have a specific surface area (BET) of 0.1 m²/g to 1.2 m²/g.

Specifically, the negative electrode active material layer may include 70 wt% to 95 wt% of natural graphite, 0 wt% to 25 wt% of artificial graphite, and 5 wt% to 30 wt% of soft carbon based on a total weight of the negative electrode active material.

Also, the negative electrode active material may include natural graphite and artificial graphite, and may specifically include natural graphite having a specific surface area (BET) of 2.5 m²/g to 4.0 m²/g and artificial graphite having a specific surface area (BET) of 0.1 m²/g to 1.2 m²/g. The negative electrode active material layer may further include soft carbon, if necessary, and, in this case, the soft carbon may have a specific surface area (BET) of 7 m²/g to 10 m²/g. Specifically, the negative electrode active material layer may include 10 wt% to 50 wt% of natural graphite, 50 wt% to 90 wt% of artificial graphite, and 0 wt% to 20 wt% of soft carbon based on the total weight of the negative electrode active material. In this case, since negative electrode rate capability is improved, a battery having excellent fast cell charging and resistance characteristics may be achieved.

The negative electrode active material may be included in an amount of 80 parts by weight to 99 parts by weight based on based on 100 parts by weight of a total weight of the negative electrode active material layer.

The binder is a component that assists in the binding between the conductive agent, the active material, and the current collector, wherein the binder is typically added in an amount of 0.1 part by weight to 10 parts by weight based on 100 parts by weight of the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber, a fluoro rubber, and various copolymers thereof.

The conductive agent is a component for further improving conductivity of the negative electrode active material, wherein the conductive agent may be added in an amount of 10 parts by weight or less, for example, 5 parts by weight or less based on 100 parts by weight of the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

For example, the negative electrode active material layer may be prepared by coating a composition for forming a negative electrode, which is prepared by dissolving or dispersing selectively the binder and the conductive agent as well as the negative electrode active material in a solvent, on the negative electrode collector and drying the coated negative electrode collector, or may be prepared by casting the composition for forming a negative electrode on a separate support and then laminating a film separated from the support on the negative electrode collector.

The negative electrode active material layer may have a single layer structure or may have a multilayer structure in which two or more layers are stacked. For example, the negative electrode may include a negative electrode collector, a first negative electrode active material layer formed on the negative electrode collector, and a second negative electrode active material layer formed on the first negative electrode active material layer, wherein the first negative electrode active material layer and the second negative electrode active material layer may have different compositions from each other.

For example, the first negative electrode active material layer may include natural graphite among all negative electrode active materials included in the first negative electrode active material layer in an amount of 5 wt% to 100 wt%, for example, 80 wt% to 100 wt%, and the second negative electrode active material layer may include soft carbon among all negative electrode active materials included in the second negative electrode active material layer in an amount of 15 wt% to 95 wt%, for example, 15 wt% to 65 wt%. When the negative electrode having the above structure is used, processability may be improved by an improvement in electrode adhesion, and a battery having excellent high-temperature storage characteristics as well as excellent fast charging performance and resistance performance may be prepared.

The negative electrode may have a loading amount of 300 mg/25 cm² to 500 mg/25 cm², for example, 300 mg/25 cm² to 400 mg/25 cm². When the loading amount of the negative electrode satisfies the above range, the process may be facilitated by ensuring sufficient electrode adhesion, a battery having excellent fast charging performance and resistance performance may be achieved, and energy density may be maximized.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be selectively used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used during the preparation of a lithium secondary battery, but the electrolyte is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an etherbased solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 2.0 M. In a case in which the concentration of the lithium salt is included within the above range, since the electrolyte may have appropriate conductivity and viscosity, excellent performance of the electrolyte may be obtained and lithium ions may effectively move.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above electrolyte components. In this case, the additive may be included in an amount of 0.1 part by weight to 5 parts by weight based on 100 parts by weight of a total weight of the electrolyte.

As described above, since the lithium secondary battery including the positive electrode active material according to the present invention stably exhibits excellent discharge capacity, output characteristics, and life characteristics, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Hereinafter, the present invention will be described in detail, according to specific examples. The invention may, however, be embodied in many different forms and should not be construed as being limited to the embodiments set forth herein. Rather, these example embodiments are provided so that this description will be thorough and complete, and will fully convey the scope of the present invention to those skilled in the art.

### Examples

### Example 1

After Mn₃O₄, Mg acetate, and Li₂CO₃ were mixed in a weight ratio of 71:11:18, first sintering was then performed at 650°C for 5 hours in an oxygen atmosphere. Subsequently, second sintering was performed at 770°C for 17 hours in an oxygen atmosphere to prepare a Mg-doped lithium manganese oxide (LiMn_{1.9}Mg_{0.1}O₄).

### Example 2

After Mn₃O₄, Mg acetate, Al nitrate, and Li₂CO₃ were mixed in a weight ratio of 61:10:13:16, first sintering was then performed at 650°C for 5 hours. Subsequently, second sintering was performed at 770°C for 17 hours to prepare a Mg, Al-doped lithium manganese oxide (LiMn_{1.82}Mg_{0.1}Al_{0.08}O₄).

### Comparative Example 1

LiMn₂O₄ was used as a lithium manganese oxide.

### Comparative Example 2

A Mg-doped lithium manganese oxide (LiMn_{1.97}Mg_{0.03}O₄) was prepared in the same manner as in Example 1 except that Mn₃O₄, Mg acetate, and Li₂CO₃ were mixed in a weight ratio of 78:3:19.

### Comparative Example 3

A Mg, Al-doped lithium manganese oxide (LiMn_{1.6}Mg_{0.3}Al_{0.1}O₄) was prepared in the same manner as in Example 1 except that Mn₃O₄, Mg acetate, Al nitrate, and Li₂CO₃ were mixed in a weight ratio of 47:25:14:14.

### Comparative Example 4

A lithium manganese oxide (LiMn_{1.9}Mg_{0.1}O₄)was prepared in the same manner as in Example 1 except that, after Mn₃O₄, Mg acetate, and Li₂CO₃ were mixed in a weight ratio of 71:11:18, sintering was performed at 770°C for 17 hours.

### Comparative Example 5

A lithium manganese oxide (LiMn_{1.9}Mg_{0.1}O₄)was prepared in the same manner as in Example 1 except that, after Mn₃O₄, Mg acetate, and Li₂CO₃ were mixed in a weight ratio of 71:11:18, sintering was performed in an air atmosphere.

### Experimental Example 1: Analysis of Positive Electrode Active Material

### (1) Crystal Structure

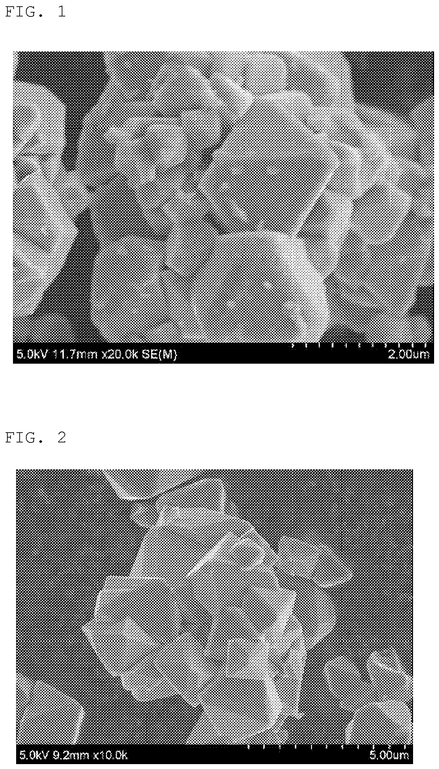

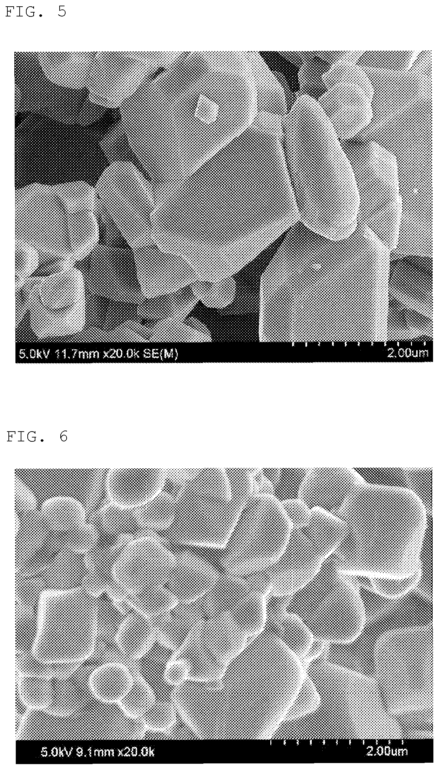

Crystal structures of the lithium manganese-based positive electrode active materials respectively prepared in Examples 1 and 2 and Comparative Examples 1 to 5 were confirmed using scanning electron microscope (SEM) images of FIGS. 1 through 7.

Specifically, with respect to the positive electrode active materials prepared in Examples 1 and 2, it may be confirmed that crystal grains with an octahedral structure, in which the surface of the positive electrode active material was oriented to a (111) plane, were predominantly formed as illustrated in FIGS. 1 and 2.

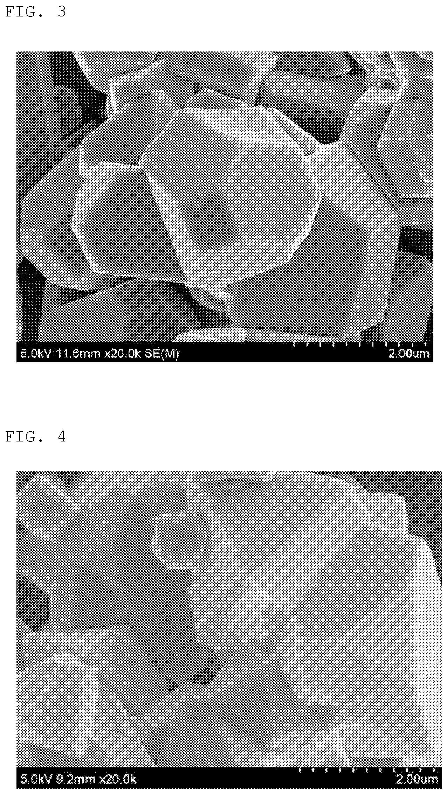

In contrast, with respect to the positive electrode active materials prepared in Comparative Examples 1 to 5, it may be confirmed that a positive electrode active material having crystal grains with an octahedral structure was not prepared as illustrated in FIGS. 3 to 7.

### (2) BET Specific Surface Area of Positive Electrode Active Material

A specific surface area of the positive electrode active material was measured by a Brunauer-Emmett-Teller (BET) method, wherein, specifically, the specific surface area was calculated from a nitrogen gas adsorption amount at a liquid nitrogen temperature (77K) using BELSORP-mini II by Bell Japan Inc.

**[Table 1]**

| | BET specific surface area (m²/g) |
|---|---|
| Example 1 | 0.523 |
| Example 2 | 0.501 |
| Comparative Example 1 | 1.57 |
| Comparative Example 2 | 1. 01 |
| Comparative Example 3 | 0.89 |
| Comparative Example 4 | 1.56 |
| Comparative Example 5 | 1.48 |

As illustrated in Table 1, it may be confirmed that BET specific surface areas of the positive electrode active materials prepared in Examples 1 and 2 were within the range of the present invention, but BET specific surface areas of the positive electrode active materials prepared in Comparative Examples 1 to 5 were greater than 1 m²/g.

### Experimental Example 2: Manganese Dissolution Test

Secondary batteries were prepared by using the positive electrode active materials prepared in Examples 1 and 2 and Comparative Examples 1 to 5, and an amount of manganese dissolution of each secondary battery was measured.

In this case, the secondary batteries were prepared in the same manner as described below except that the positive electrode active materials respectively prepared in Examples 1 and 2 and Comparative Examples 1 to 5 were used. Specifically, each of the positive electrode active materials prepared in Examples 1 and 2 and Comparative Examples 1 to 5, a carbon black conductive agent, and a polyvinylidene fluoride binder were mixed in a weight ratio of 90:5:5 and then mixed in a N-methylpyrrolidone (NMP) solvent to prepare a composition for forming a positive electrode. A 20 µm thick aluminum current collector was coated with the composition for forming a positive electrode, dried, and roll-pressed to prepare a positive electrode. After the above-prepared positive electrode and Li metal, as a negative electrode, were stacked with a polyethylene separator to prepare a secondary battery by a conventional method, the secondary battery was put in a battery case, and an electrolyte solution, in which 1 M LiPF₆ was dissolved in a solvent in which ethylene carbonate:dimethyl carbonate:diethyl carbonate were mixed in a volume ratio of 1:2:1, was injected thereinto to prepare each lithium secondary battery (coin cell) according to Examples 1 and 2 and Comparative Examples 1 to 5.

Each of the secondary batteries of Examples 1 and 2 and Comparative Examples 1 to 5 thus prepared was charged and discharged once, and then fully charged to 4.25 V. Subsequently, the secondary battery was disassembled and kept sealed in 4 mL of an electrolyte solution for 4 weeks, and an amount of Mn dissolved in the electrolyte solution was measured by inductively coupled plasma (ICP) analysis. In this case, the electrolyte solution was prepared by dissolving 1 M LiPF₆ in an organic solvent, in which ethylene carbonate:dimethyl carbonate:diethyl carbonate were mixed in a volume ratio of 1:2:1, and mixing 2 wt% of vinylene carbonate therewith.

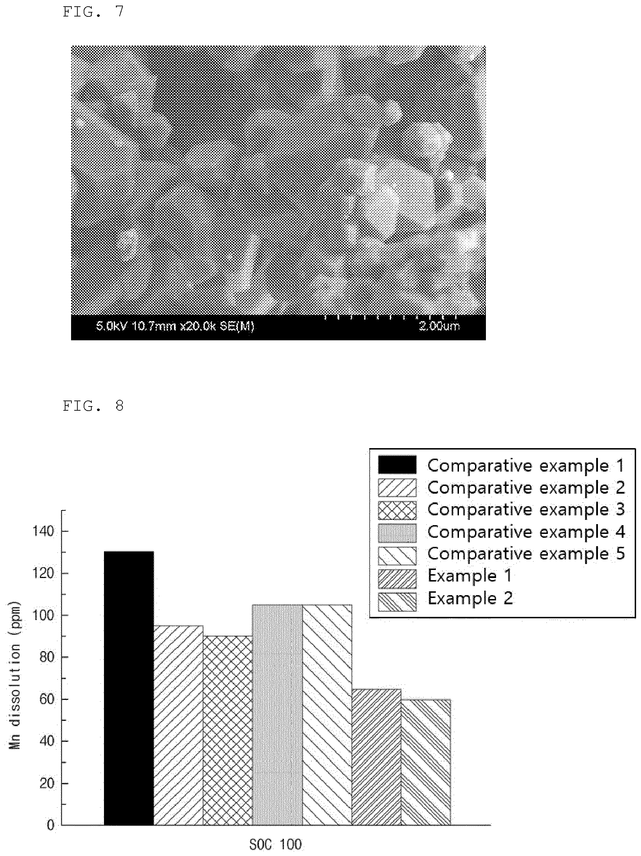

The measurement results are presented in Table 2 and FIG. 8 below.

**[Table 2]**

| | Manganese dissolution amount (ppm) |
|---|---|
| Example 1 | 65 |
| Example 2 | 60 |
| Comparative Example 1 | 130 |
| Comparative Example 2 | 95 |
| Comparative Example 3 | 90 |
| Comparative Example 4 | 105 |
| Comparative Example 5 | 105 |

As illustrated in Table 2 and FIG. 8, it may be confirmed that amounts of manganese dissolution of the secondary batteries prepared in Examples 1 and 2 were significantly smaller than amounts of manganese dissolution of the secondary batteries prepared in Comparative Examples 1 to 5.

### Experimental Example 3: High-temperature Life Characteristics

Life characteristics at high temperature were measured for the secondary batteries of Examples 1 and 2 and Comparative Examples 1 to 5 prepared in Experimental Example 2.

Specifically, each of the lithium secondary batteries (mono-cells) prepared in Examples 1 and 2 and Comparative Examples 1 to 5 was charged at a constant current of 0.5 C to 4.2 V at 45°C and cut-off charged at 0.05 C. Subsequently, each lithium secondary battery was discharged at a constant current of 0.5 C to a voltage of 3 V.

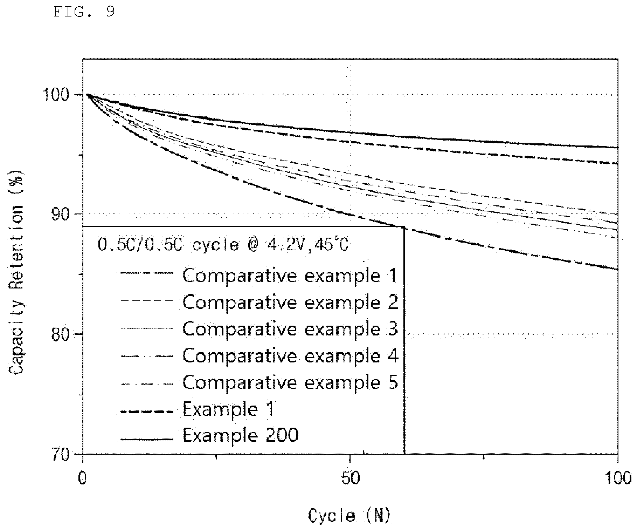

The charging and discharging behaviors were set as one cycle, and, after this cycle was repeated 100 times, high-temperature (45°C) life characteristics according to Examples 1 and 2 and Comparative Examples 1 to 5 were measured, and the results thereof are presented in Table 3 and FIG. 9 below.

**[Table 3]**

| | Capacity retention (%) |
|---|---|
| Example 1 | 94.5 |
| Example 2 | 95.8 |
| Comparative Example 1 | 85.4 |
| Comparative Example 2 | 90.0 |
| Comparative Example 3 | 88.9 |
| Comparative Example 4 | 88.4 |
| Comparative Example 5 | 89.3 |

As illustrated in Table 3 and FIG. 9, it may be confirmed that high-temperature life characteristics of the secondary batteries prepared in Examples 1 and 2 were better than high-temperature life characteristics of the secondary batteries prepared in Comparative Examples 1 to 5.

## Claims

1. A method of preparing an octahedral-structured lithium manganese-based positive electrode active material, comprising:
mixing a manganese raw material, a raw material including doping element M¹ (where the doping element M¹ is at least one element selected from the group consisting of magnesium (Mg), aluminum (Al), lithium (Li), zinc (Zn), boron (B), tungsten (W), nickel (Ni), cobalt (Co), iron (Fe), chromium (Cr), vanadium (V), ruthenium (Ru), copper (Cu), cadmium (Cd), silver (Ag), yttrium (Y), scandium (Sc), gallium (Ga), indium (In), arsenic (As), antimony (Sb), platinum (Pt), gold (Au), and silicon (Si)), and a lithium raw material, and
sintering the mixture in an oxygen atmosphere to prepare a lithium manganese oxide having an octahedral structure and doped with the doping element M¹,
wherein the sintering comprises performing first sintering at 400°C to 700°C for 3 hours to 10 hours, and
performing second sintering at 700°C to 900°C for 10 hours to 20 hours.

2. The method of claim 1, wherein the lithium manganese oxide is represented by Formula 1:
[Formula 1] Li₁₊ₐMn_{2-b}M¹_{b}O_{4-c}A_{c}
wherein, in Formula 1,
M¹ is at least one element selected from the group consisting of Mg, Al, Li, Zn, B, W, Ni, Co, Fe, Cr, V, Ru, Cu, Cd, Ag, Y, Sc, Ga, In, As, Sb, Pt, Au, and Si, A is at least one element selected from the group consisting of fluorine (F), chlorine (Cl), bromine (Br), iodine (I), astatine (At), and sulfur (S), 0≤a≤0.2, 0.05≤b≤0.3, and 0≤c≤0.1.

3. The method of claim 1, wherein the manganese raw material, the raw material including doping element M¹, and the lithium raw material are mixed in amounts such that a molar ratio of Mn:M¹:Li is in a range of 1.7:0.3:1 to 1.99:0.01:1.2.

4. The method of claim 1, wherein the raw material including doping element M¹ comprises at least one selected from Mg and Al.

5. An octahedral-structured lithium manganese-based positive electrode active material comprising: a lithium manganese oxide represented by Formula 1 and doped with doping element M¹,
wherein the lithium manganese oxide has an octahedral structure:
[Formula 1] Li₁₊ₐMn_{2-b}M¹_{b}O_{4-c}A_{c}
wherein, in Formula 1,
M¹ is at least one element selected from the group consisting of magnesium (Mg), aluminum (Al), lithium (Li), zinc (Zn), boron (B), tungsten (W), nickel (Ni), cobalt (Co), iron (Fe), chromium (Cr), vanadium (V), ruthenium (Ru), copper (Cu), cadmium (Cd), silver (Ag), yttrium (Y), scandium (Sc), gallium (Ga), indium (In), arsenic (As), antimony (Sb), platinum (Pt), gold (Au), and silicon (Si), A is at least one element selected from the group consisting of fluorine (F), chlorine (Cl), bromine (Br), iodine (I), astatine (At), and sulfur (S), 0≤a≤0.2, 0.05≤b≤0.3, and 0≤c≤0.1.

6. The octahedral-structured lithium manganese-based positive electrode active material of claim 5, wherein the lithium manganese oxide has a (111) oriented surface.

7. The octahedral-structured lithium manganese-based positive electrode active material of claim 5, wherein the doping element M¹ comprises at least one metallic element selected from the group consisting of Al and Mg.

8. The octahedral-structured lithium manganese-based positive electrode active material of claim 5, wherein the lithium manganese-based positive electrode active material has an average particle diameter (D₅₀) of 5 µm to 20 µm.

9. The octahedral-structured lithium manganese-based positive electrode active material of claim 5, wherein the lithium manganese-based positive electrode active material has a specific surface area of 0.3 m²/g to 1.0 m²/g.

10. A positive electrode comprising a positive electrode collector, and a positive electrode active material layer formed on the positive electrode collector,
wherein the positive electrode active material layer comprises the octahedral-structured lithium manganese-based positive electrode active material of any one of claims 5 to 9.

11. A lithium secondary battery comprising the positive electrode of claim 10.
